# EUROPÄISCHE PATENTANMELDUNG

(11) **EP 1 514 978 A2**
(43) Veröffentlichungstag der Anmeldung: **16.03.2005**
(21) Anmeldenummer: 04021070.0
(22) Anmeldetag: 04.09.2004
(51) Int. Cl.: E04F 13/06, B29C 47/02, B29C 47/12

(54) **Beidseits beschichtete Gewebeschicht und Verfahren zur Herstellung derselben**

(30) Priorität: 10.09.2003 DE 20314023 U
(71) Anmelder: Wörner, Elisabeth, 72805 Lichtenstein (DE)
(72) Erfinder: Wörner, Elisabeth, 72805 Lichtenstein (DE)
(74) Vertreter: Kohler Schmid Möbus

(57) **Zusammenfassung**

Bei einem Verfahren zur Herstellung einer beidseits zumindest abschnittsweise beschichteten Gewebeschicht (3), insbesondere eines Gewebestreifens, wird das Beschichtungsmaterial in plastifiziertem Zustand beidseits der Gewebeschicht (3) an sich gegenüberliegenden Stellen über jeweils eine Materialzuführung unter Druck, insbesondere mittels Extrusion, der Gewebeschicht (3) zugeführt. Dadurch wird die Herstellung vereinfacht und die Stabilität erhöht.

## Beschreibung

Die Erfindung betrifft ein Verfahren zur Herstellung einer beidseits zumindest abschnittsweise beschichteten Gewebeschicht, eine Gewebeschicht und eine Extrudiervorrichtung zur Herstellung der beschichteten Gewebeschicht.

Als Anwendung einer derartigen Gewebeschicht ist beispielsweise an einen Einputzwinkel gedacht.

Einputzwinkel werden beispielsweise als Eckenbewehrung für die auf die Wärmedämmschicht eines Gebäudes aufzutragende, als Untergrund für die Sichtputzschicht dienende und mit Gewebematten bewehrte Spachtelschicht oder für den Eckbereich einer mineralischen Sichtputzschicht eingesetzt.

Bei bekannten Einputzwinkeln wird die Eckleiste mit dem Gewebe verklebt. Die Verwendung eines Klebers hat das Problem, dass sich die Klebeverbindung bei hohen Temperaturen auflösen kann. Bei kalten Temperaturen kann die Klebeverbindung spröde werden. Dies führt zu einem Trennen der Bauteile. Aus dem Stand der Technik ist es außerdem bekannt, die Gewebeschicht mit der Eckleiste zu verschweißen oder die Eckleiste an das Gewebe anzunähen. Dafür sind immer zusätzliche Arbeitsschritte notwendig.

Aus der DE 34 30 614 A1 ist ein Einputzwinkel als Eckenbewehrung bekannt, der aus einem im Querschnitt winkelförmig gestalteten äußeren Glasfaser-Gewebestreifen und einer im Winkeleck schmaleren inneren Eckverstärkung besteht. Die Eckverstärkung für den äußeren Bewehrungs-Gewebestreifen ist durch einen weiteren Verstärkungs-Gewebestreifen aus Glasfaser gebildet, der an dem Bewehrungs-Gewebestreifen unmittelbar anliegt und mindestens an gleichmäßig über die Anlagefläche der beiden Gewebestreifen verteilten Stellen, an denen Schussfäden des Bewehrungs-Gewebestreifens mit Schussfäden des Verstärkungs-Gewebestreifen aneinander anliegen, die Fäden in aushärtbarem Kunststoff eingebettet sind, derart, dass die größte Dicke der dabei gebildeten Glasfaser-Kunststoffschicht gleich der Gesamtdicke der beiden Gewebestreifen in deren Anlagebereich ist.

Aus der EP 0 915 215 A2 ist ein Kantenschutzrichtwinkel bekannt geworden. Dabei wird zuerst ein Kunststoffwinkelprofil als Grundkörper hergestellt. Zur Verbindung eines Gewebestreifens mit dem Grundkörper wird eine Abzugsleiste an das Winkelprofil anextrudiert. Dieser Herstellungsprozess ist relativ aufwändig. Außerdem ist das Gewebe im Winkelprofilbereich nur abschnittsweise in eine Materialschicht eingebettet.

Aus der EP 1 046 488 A2 ist es bekannt, beim Herstellen von Kunststoffprofilen mit Gittergewebekonfektionierung das Kunststoffprofil durch Extrudieren herzustellen und beim Extrudieren wenigstens einen Randstreifen eines lang gestreckten Gittergewebes in das noch plastifizierte Kunststoffmaterial einzubetten. Dabei ist beabsichtigt, dass das plastifizierte Kunststoffmaterial die Gittergewebemaschen durchdringt und das die Maschen bildende Material des Gittergewebes umschließt. Die Herstellung erweist sich unter anderem deshalb als schwierig, da das Gittergewebe mit einer der Ausformgeschwindigkeit des extrudierten Kunststoffprofils entsprechenden Geschwindigkeit mit dem noch plastifizierten Kunststoffmaterial zusammengeführt werden muss. Bei dieser Maßnahme ist außerdem nicht sichergestellt, dass das Kunststoffmaterial das Gitter durchdringt und das Gitter sicher im Kunststoffmaterial gehalten ist.

Aufgabe der vorliegenden Erfindung ist es deshalb, ein Verfahren zur Herstellung eines beschichten Gewebestreifens, insbesondere eines Einputzwinkels, bereitzustellen, mit dem eine sichere Verankerung des Gewebes mit der Beschichtung erreicht werden kann.

Diese Aufgabe wird erfindungsgemäß durch ein Verfahren der eingangs genannten Art gelöst, bei dem das Beschichtungsmaterial im plastifizierten Zustand beidseits der Gewebeschicht an sich gegenüberliegenden Stellen über jeweils eine Materialzuführung unter Druck, insbesondere mittels Extrusion, der Gewebeschicht zugeführt wird. Dadurch, dass das Material von beiden Seiten dem Gewebe unter Druck zugeführt wird, wird sichergestellt, dass das Material auch in die Maschen zwischen den Fasern des Gewebes gelangt. Dies bedeutet, dass im Bereich der Beschichtung sichergestellt ist, dass das Gewebe ummantelt wird. Würde das Material nur von einer Seite zugeführt, würde das Material absacken und aus den Maschen fallen. Deshalb ist es vorteilhaft, das Material auch von der anderen Seite zuzuführen. Durch dieses Verfahren wird eine besondere mechanische Festigkeit und Stabilität erreicht.

Bei einer Verfahrensvariante kann vorgesehen sein, dass das Beschichtungsmaterial auf die Gewebeschicht beidseitig aufgespritzt wird. Das Aufspritzen des Materials kann im Gegensatz zu bekannten Spritzgießverfahren kontinuierlich erfolgen. Durch das Aufspritzen wird sichergestellt, dass das Material nicht nur lose am Gewebe haftet.

Es kann vorgesehen sein, dass das Beschichtungsmaterial auf beiden Seiten der Gewebeschicht mit unterschiedlichem oder gleichem Druck zugeführt wird. Die Drücke können abhängig vom zu beschichtenden Gewebe und von der gewünschten Form der resultierenden Beschichtung eingestellt werden.

Besonders bevorzugt ist es, wenn die Beschichtung in einem kontinuierlichen Herstellungsvorgang in einer Extrudiervorrichtung erfolgt, wobei die Gewebeschicht durch die Vorrichtung gezogen wird und der Beschichtungsmaterialtransport aus der Extrudiervorrichtung ausschließlich über die Gewebeschicht erfolgt. Dies bedeutet, dass es sich bei dem erfindungsgemäßen Herstellungsverfahren um ein abgewandeltes Extrudierverfahren handelt. Während beim Extrudieren das zu extrudierende Material am extrudierten Profil selbst durch die Extrudiervorrichtung gezogen bzw. gefördert wird, wird erfindungsgemäß der Materialtransport ausschließlich anhand der Bewegung des Gewebes durchgeführt. Das Gewebe wird durch die Extrudiervorrichtung gezogen und dabei beschichtet. Eine Abstimmung der Geschwindigkeiten der Förderung des Gewebes und des Materials muss daher nicht erfolgen.

Ein besonderer Vorteil der Erfindung liegt darin, dass die Gewebeschicht vor dem Aufbringen des Beschichtungsmaterials insbesondere mechanisch in eine vorgegebene, das heißt gewünschte Form gebracht wird und nach der Herstellung ausschließlich durch das Beschichtungsmaterial in der gewünschten Form gehalten wird. Dies bedeutet, dass die Gewebeschicht vor der Beschichtung in eine entsprechende Form, beispielsweise in eine Winkelform, gebracht wird. Danach wird das plastifizierte Material vorzugsweise in dem Bereich aufgetragen, in dem die Formgebung erfolgt, beispielsweise im Kantenbereich von zwei in einem Winkel zueinander verlaufenden Gewebestreifenabschnitten. Nach dem Abkühlen des Beschichtungsmaterials wird die Gewebeschicht in der gewünschten Form gehalten. Es ist insbesondere nicht notwendig, die Gewebeschicht aus einem thermoplastischen Material auszubilden und das Gewebe während eines Erwärmungsprozesses vorzuformen.

Vorteilhafterweise erhält das Beschichtungsmaterial entsprechend der vorgesehenen Funktion des Produkts, das heißt der beschichteten Gewebeschicht, eine Formgestaltung. Insbesondere kann das Beschichtungsmaterial als Eckleiste ausgeformt werden, in der die Gewebeschicht gehalten ist.

Bei einer Weiterbildung des Verfahrens kann vorgesehen sein, dass aus dem Beschichtungsmaterial ein Profil geformt wird, das in einem Endbereich mit einem Steg, einer Abzugskante, einer Tropfkante oder dergleichen ausgebildet wird. Durch diese Maßnahme wird das hergestellte Produkt für unterschiedliche Verwendungen ausgebildet. Besonders vorteilhaft ist es, dass während der Einbettung des Gewebestreifens in dem Beschichtungsmaterial ein Profil ausgebildet werden kann.

Wenn eine hohe Maßhaltigkeit des Profils gefordert wird, kann vorgesehen sein, dass dieses nachgearbeitet wird. Insbesondere ist eine Nachbearbeitung einer Kante oder eines Stegs denkbar, um eine exaktere Form zu erhalten.

Besonders vorteilhaft ist es, wenn durch die beiden Materialzuführungen, insbesondere durch zwei Düsen, unterschiedliche Beschichtungsmaterialien, insbesondere unterschiedliche Kunststoffmischungen zugeführt werden, sodass die Gewebeschicht auf sich gegenüberliegenden Seiten unterschiedliche Beschichtungsmaterialien aufweist.

Die Aufgabe wird außerdem gelöst durch eine Gewebeschicht, die zumindest abschnittsweise in einem Beschichtungsmaterial eingebettet ist, wobei das Beschichtungsmaterial an sich gegenüberliegenden Stellen der Gewebeschicht unter Druck durch jeweils eine Materialzuführung in plastifiziertem Zustand aufgebracht, insbesondere aufextrudiert ist. Dies bedeutet, dass die Gewebeschicht nicht nur in das extrudierte Material eingelegt ist. Deshalb wird eine bessere Halterung der Gewebeschicht an dem Material erzeugt.

Bei einer bevorzugten Ausgestaltung der Erfindung ist vorgesehen, dass das Beschichtungsmaterial die Gewebeschicht in einer vordefinierten Form hält. Dies bedeutet, dass das unter Druck zugeführte Beschichtungsmaterial, insbesondere Kunststoff, das Gewebe in der gewünschten Form hält. Dabei ist das Gewebe in die gewünschte Form vorgeformt bzw. in der gewünschten, vorgebbaren Form gehalten, ehe das Material beidseitig aufgespritzt wird.

Eine besonders bevorzugte Anwendung ergibt sich, wenn das Beschichtungsmaterial als Profil, insbesondere als Eckleiste eines Einputzwinkels, ausgebildet ist. Im Gegensatz zum Stand der Technik, wo ein Profil mit einem Gewebe konfektioniert wird, wird erfindungsgemäß ein Gewebe mit einem Profil, insbesondere einer Eckleiste, konfektioniert.

Vorteilhafterweise erhält das Beschichtungsmaterial im Endbereich eine besondere Ausbildung, insbesondere eine Abzugskante oder Tropfkante. Eine Tropfkante hat den Vorteil, dass Wasser von einem Gebäude weg geführt werden kann, wenn die Gewebeschicht mit einem Einputzwinkel und einer Tropfkante versehen ist und an einem Gebäude angebracht wird.

Erfindungsgemäß wird also zunächst eine Gewebeform, insbesondere ein Gewebewinkel, hergestellt und dann auf diese Gewebeform, insbesondere diesen Gewebewinkel, ein Profil, insbesondere eine Eckleiste, vorzugsweise mit zwei als Düsen ausgebildeten Materialzuführungen direkt aufextrudiert. Dies bedeutet, dass kein separater Arbeitsgang zur Herstellung des Profils bzw. der Eckleiste notwendig ist. Der Klebeschritt entfällt. Daher ist eine schnellere Fertigung möglich. Die Herstellung der Eckleiste und die Verbindung der Eckleiste mit der Gewebeschicht erfolgt in einem Arbeitsschritt. Außerdem ist sichergestellt, dass sich die Eckleiste nicht mehr vom Gewebe lösen kann. Insbesondere kann es aufgrund von Temperaturschwankungen nicht mehr zu einem Trennen der Bauteile kommen.

Besonders vorteilhaft ist es, wenn das Beschichtungsmaterial aus Kunststoff, vorzugsweise aus PVC, hergestellt ist. Diese Werkstoffe lassen sich besonders einfach durch Extrudieren verarbeiten. Deshalb kann mit ihnen eine besonders gute Verbindung zwischen Beschichtungsmaterial, z. B. einer Eckleiste, und Gewebe hergestellt werden.

Ein besonders stabiler Einputzwinkel kann geschaffen werden, wenn die Gewebeschicht aus Glasfasern hergestellt ist. Alternativ kann jedoch auch vorgesehen sein, dass die Gewebeschicht aus Metall oder aus Leinen hergestellt ist. Eine Gewebeschicht aus Metall kann beispielsweise ein Drahtgitter sein. Durch geeignete Wahl der Gewebeschicht kann die beschichtete Gewebeschicht, insbesondere der Einputzwinkel, dem jeweiligen Anwendungsbereich angepasst werden.

In den Rahmen der Erfindung fällt außerdem eine Extrudiervorrichtung mit einer ersten und zweiten Materialzuführung, die im Wesentlichen einander gegenüberliegend angeordnet sind, wobei zwischen den Materialzuführungen ein Zwischenraum für eine Gewebeschicht ausgebildet ist. Mit einer derartigen Extrudiervorrichtung kann auf einfache Art und Weise eine Gewebeschicht mit Material beidseits beschichtet werden.

Besonders bevorzugt ist es, wenn eine Transporteinrichtung zum Transport der Gewebeschicht durch die Extrudiervorrichtung vorgesehen ist. Dabei ist es ausreichend, die Gewebeschicht zu transportieren. Das extrudierte Material muss nicht extra aus der Extrudiervorrichtung gezogen werden.

Vorteilhafterweise ist ein Formwerkzeug zur Formgebung des durch die Materialzuführungen zugeführten Materials vorgesehen. Dadurch kann der beidseits aufgebrachten Beschichtung eine besondere Form gegeben werden, beispielsweise kann die Beschichtung als Eckleiste ausgebildet werden. Dabei kann die Ausbildung als Eckleiste gleichzeitig mit der Beschichtung des Gewebestreifens erfolgen.

Besonders vorteilhaft ist es, wenn eine Vorformeinrichtung in Bearbeitungsrichtung vor den Materialzuführungen angeordnet ist, die der Gewebeschicht eine gewünschte Form gibt. Beispielsweise kann die Gewebeschicht zu einem Winkel geformt werden und bereits in dieser Form den Materialzuführungen zugeführt werden, sodass Material beispielsweise im Kantenbereich eines solchen Winkels zugeführt werden kann und durch das aufgebrachte Material die Gewebeschicht in der vorgeformten Form gehalten werden kann.

Weitere Merkmale und Vorteile der Erfindung ergeben sich aus der nachfolgenden Beschreibung eines Ausführungsbeispiels der Erfindung, anhand der Figuren der Zeichnung, die erfindungswesentliche Einzelheiten zeigen, und aus den Ansprüchen. Die einzelnen Merkmale können je einzeln für sich oder zu mehreren in beliebiger Kombination bei einer Variante der Erfindung verwirklicht sein.

Ausführungsbeispiele sind in der schematischen Zeichnung dargestellt und werden in der nachfolgenden Beschreibung erläutert.

Es zeigen:
- Fig. 1a: eine perspektivische Ansicht einer Gewebeschicht mit beidseitiger Beschichtung;
- Fig. 1b: einen vergrößerten Ausschnitt der Fig. 1a;
- Fig. 2a: eine alternative Ausführungsform der Beschichtung;
- Fig. 2b: einen vergrößerten Ausschnitt der Fig. 2a;
- Fig. 3a: eine weitere Ausgestaltung der Beschichtung;
- Fig. 3b: einen vergrößerten Ausschnitt der Fig. 3a;
- Fig. 4: eine schematische Darstellung einer Extrudiervorrichtung;
- Fig. 5: eine Darstellung zur Verdeutlichung der Vorformung eines Gewebestreifens und des Transports des Gewebestreifens;
- Fig. 6a - 6c: Darstellungen zur Verdeutlichung des Herstellungsverfahrens.

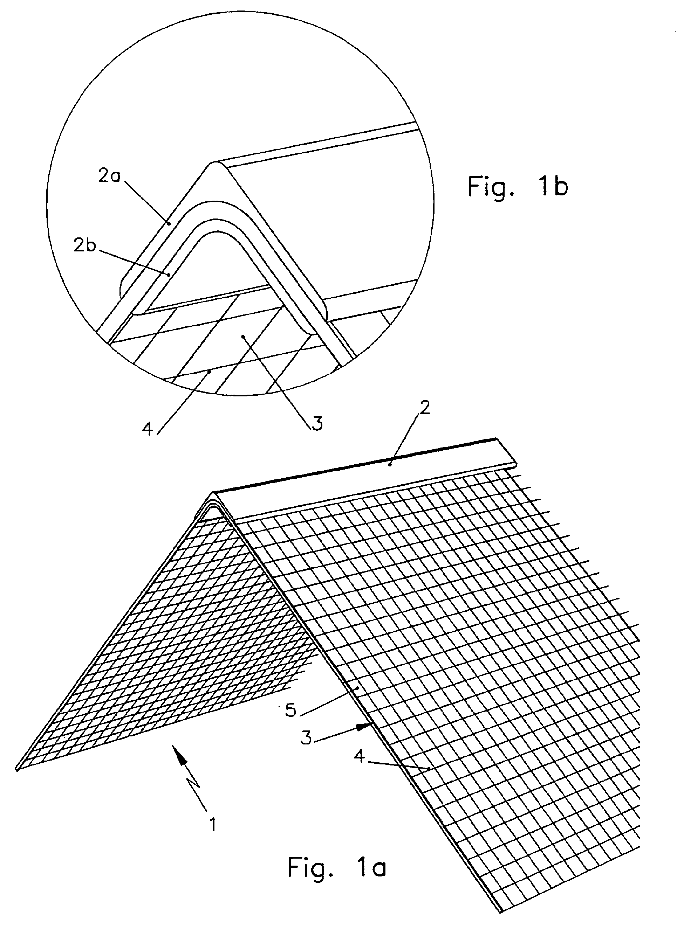

Die Fig. 1a zeigt die Erfindung am Beispiel eines Einputzwinkels 1, der ein als Eckleiste ausgebildetes Profil 2 und eine Gewebeschicht 3 umfasst. Die Gewebeschicht 3 ist ein Geflecht aus beispielsweise Glasfasern 4. Die Gewebeschicht 3 ist in einem Winkel gebogen und bildet daher einen Gewebewinkel. Das Profil 2 ist beidseits auf die Gewebeschicht 3 aufextrudiert. Dies bedeutet, dass eine erste Materialschicht 2a (Fig. 1b) durch eine erste Materialzuführung von oben und eine zweite Materialschicht 2b durch eine Materialzuführung von unten im Kantenbereich des Gewebewinkels zugeführt wird. Die Materialschichten 2a, 2b werden jeweils im plastifizierten Zustand unter Druck zugeführt, sodass sie die Maschen 5 durchdringen und dadurch die Fasern 4 vollständig umschließen bzw. diese zwischen den Schichten 2a, 2b eingebettet sind. Nach dem Aushärten der Schichten 2a, 2b wird die Gewebeschicht 3 durch die Materialschichten 2a, 2b in der Gewebewinkelform gehalten. Durch das beidseitige Aufextrudieren der Schichten 2a, 2b auf die Gewebeschicht 3 erfolgt ein Umschließen der Fasern bzw. Fäden 4 der Gewebeschicht 3. Dadurch wird das Profil 2 besonders gut an der Gewebeschicht 3 gehalten.

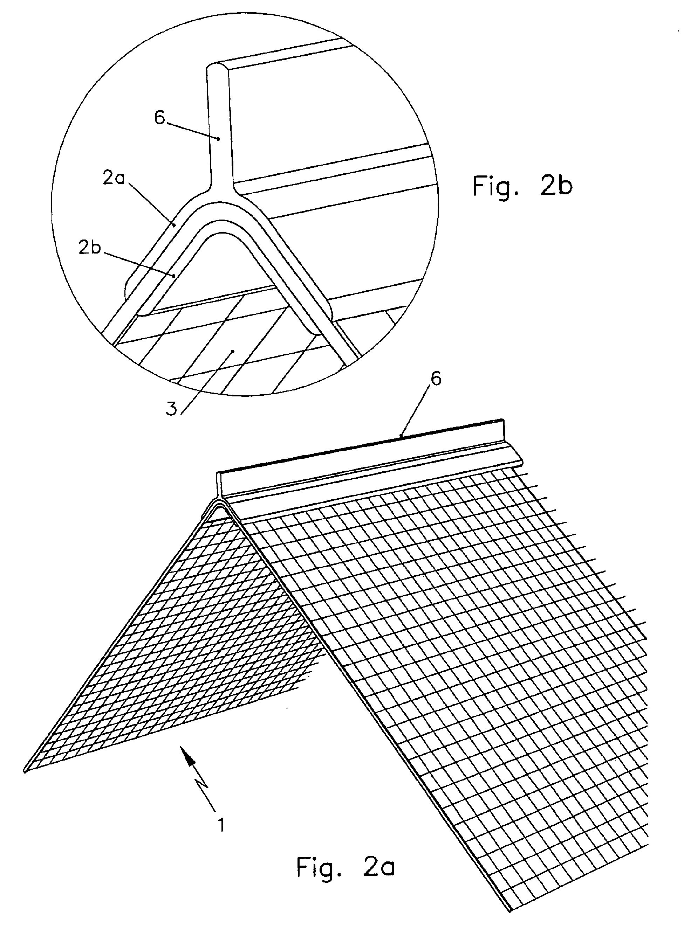

Ausweislich der Fig. 2a ist das Profil 2 als Eckleiste ausgebildet, die eine Abzugskante 6 aufweist. Dadurch wird das Einputzen des Einputzwinkels 1 erleichtert. Die Abzugskante 6 wird während des Aufextrudierens der Materialschicht 2a ausgebildet. Es ist daher kein zusätzlicher Arbeits- bzw. Herstellungsschritt notwendig.

Die Gewebeschicht 3 ist, wie dies aus der Fig. 2b besonders gut ersichtlich ist, zwischen den Materialschichten 2a, 2b eingebettet.

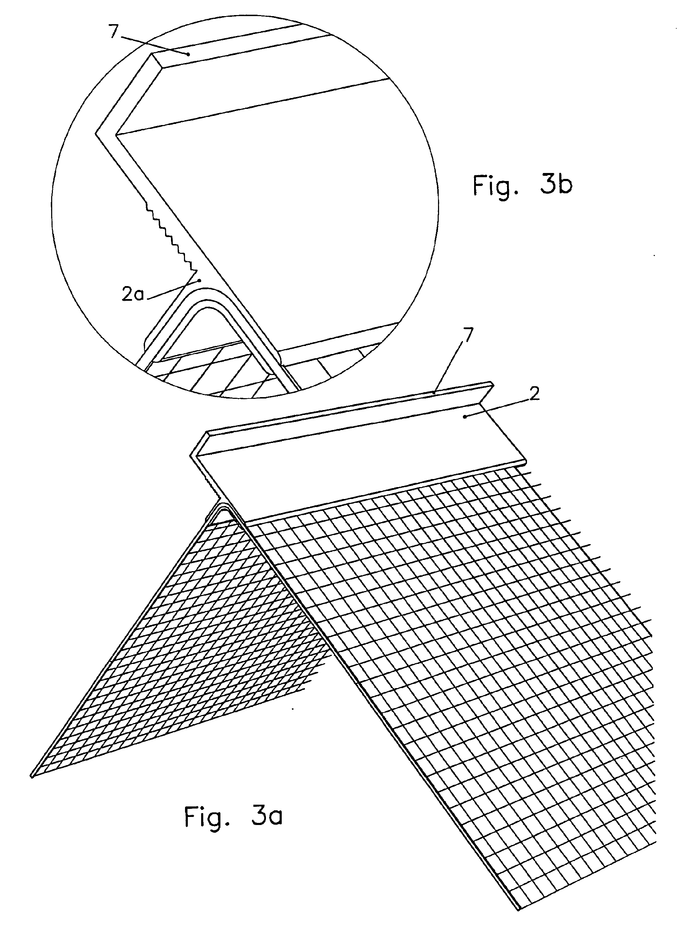

In der Fig. 3a und 3b ist ein alternatives Ausführungsbeispiel dargestellt. An dem als Eckleiste ausgebildeten Profil 2 ist eine Tropfkante 7 ausgebildet. Die Tropfkante 7 ist, wie dies insbesondere der Fig. 2b zu entnehmen ist, an der Materialschicht 2a angeformt und gleichzeitig mit dieser hergestellt.

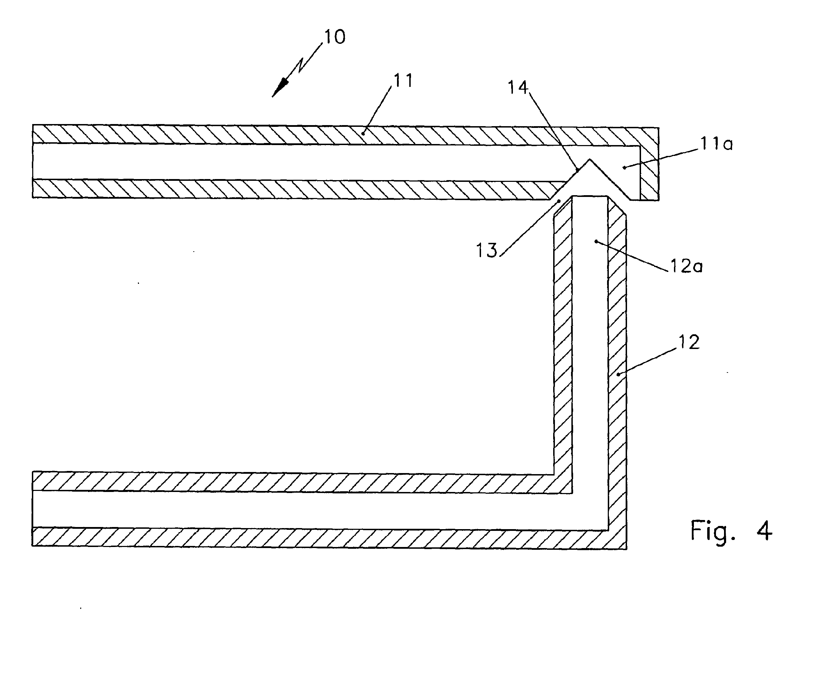

In der Fig. 4 ist eine Schnittdarstellung durch einen Teil einer Extrudiervorrichtung 10 dargestellt, die zur Herstellung eines beschichteten Gewebestreifens geeignet ist. Sie umfasst eine obere erste Materialzuführung 11 und eine untere zweite Materialzuführung 12, die jeweils als Düsen ausgebildet sein können. An sich gegenüberliegenden Öffnungen 11a, 12a kann zugeführtes plastifiziertes Material, insbesondere Kunststoff, austreten. Zwischen den Materialzuführungen 11, 12 ist ein Zwischenraum 13 vorgesehen, in dem ein Gewebestreifen bzw. eine Gewebeschicht transportiert werden kann. Während des Transports des Gewebestreifens wird dem Gewebestreifen somit von oben und von unten Beschichtungsmaterial zugeführt, wodurch die Gewebeschicht in das Beschichtungsmaterial eingebettet wird. Das Beschichtungsmaterial wird unter Druck zugeführt, um ein besonders sicheres und gutes Umschließen der Gewebefasern oder Fäden sicherzustellen. Im Ausführungsbeispiel ist in der ersten Materialzuführung 11 ein Formwerkzeug 14 vorgesehen, mit dem dem zugeführten plastifizierten Material seine endgültige Form gegeben wird. Durch ein derartiges Formwerkzeug 14 kann beispielsweise eine Eckleiste ausgebildet werden, in der das Gewebe eingebettet ist.

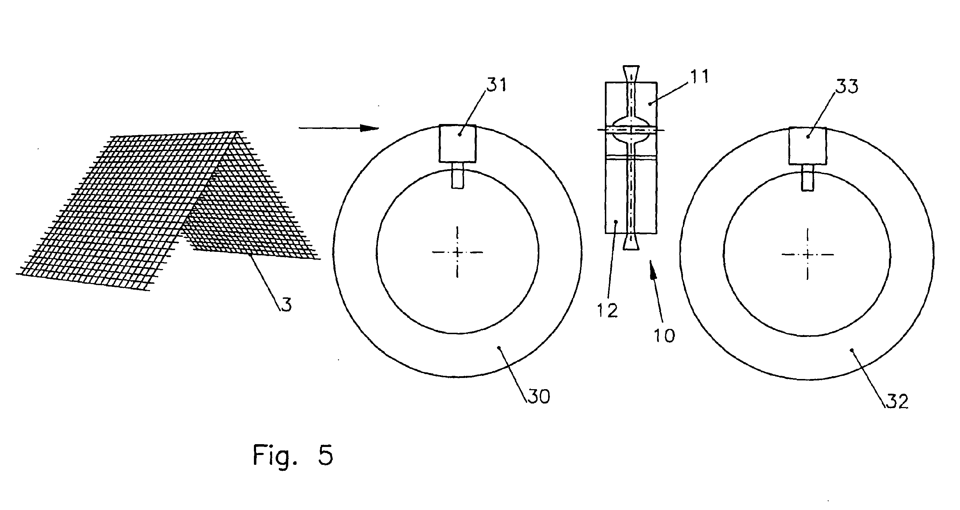

In der Fig. 5 ist äußerst schematisch eine Anlage zur Durchführung des Herstellungsverfahrens dargestellt. Durch Zusammenwirken einer ersten Rolle 30 mit zwei Andrückrollen 31 wird ein Gewebestreifen 3 in die dargestellte Form gebracht. Dies bedeutet, dass der Gewebestreifen 3 den Rollen 30, 31 zunächst in einer flachen Form zugeführt wird und die dargestellte Winkelform erst durch die Rollen 30, 31 erfährt. Durch die Rollen 30, 31 wird der Gewebestreifen 3 daher mechanisch vorgeformt. In der vorgeformten Form wird er der Extrudiervorrichtung zugeführt, wo Beschichtungsmaterial über die Materialzuführungen 11, 12 zugeführt wird. Der Gewebestreifen 3 wird durch die Extrudiervorrichtung 10 über Rollen 32, 33 gezogen. Es ist also keine zusätzliche Transporteinrichtung für das Extrudat vorgesehen.

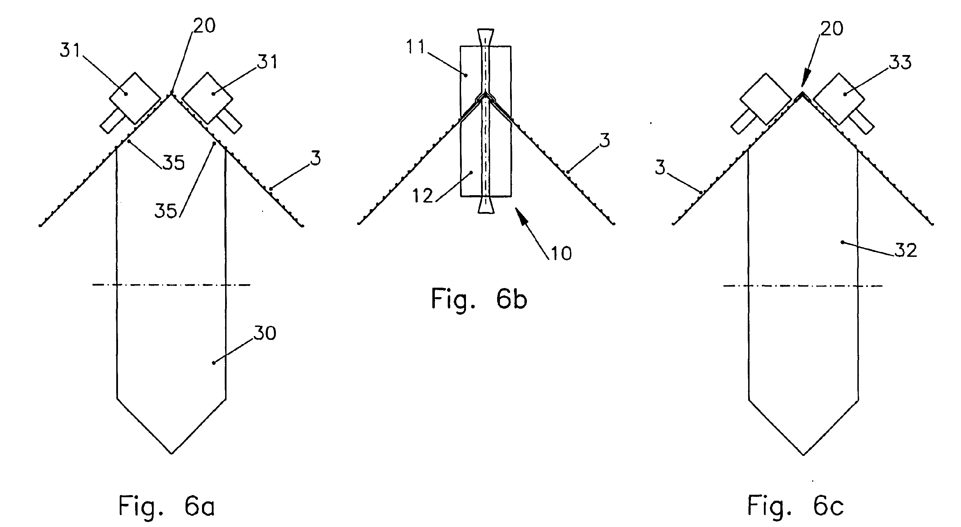

In der Fig. 6a ist das Vorformen des Gewebestreifens 3 im Querschnitt dargestellt. Die im Querschnitt sechseckförmige Rolle 30 stützt den Gewebestreifen 3 von unten ab. Durch Andrückrollen 31 wird der Gewebestreifen 3 auf Schrägflächen 35 der Rolle 30 gedrückt, wodurch der Gewebestreifen 3 seinen Ausführungsbeispielen winkelförmige Ausgestaltung erhält. Der Kantenbereich 20 des Gewebestreifens 3 weist noch kein Beschichtungsmaterial auf.

Ausweislich Fig. 6b wird der Gewebestreifen 3 durch die als Aufspritzstation ausgebildete Extrudiervorrichtung 10 transportiert. Durch die Materialzuführungen 11, 12 wird dem Gewebestreifen 3 Beschichtungsmaterial von oben und unten im Kantenbereich 20 zugeführt. Durch diese Maßnahme wird eine Eckleiste hergestellt, die das Gewebe des Gewebestreifens 3 einschließt. Durch die Materialzuführungen 11, 12 können unterschiedliche Beschichtungsmaterialien, je nach Anwendungsart des Gewebestreifens 3 zugeführt werden.

Durch die Rollen 32, 33, wie dies in der Fig. 6c zu sehen ist, wird der Gewebestreifen 3, der nun in seinem Kantenbereich 20 Beschichtungsmaterial aufweist, aus der Extrudiervorrichtung 10 transportiert. Durch das aufgebrachte Beschichtungsmaterial wird die Form des Gewebestreifens 3 festgelegt und gehalten.

## Patentansprüche

1. Verfahren zur Herstellung einer beidseits zumindest abschnittsweise beschichteten Gewebeschicht (3), insbesondere eines Gewebestreifens, **dadurch gekennzeichnet, dass** das Beschichtungsmaterial in plastifiziertem Zustand beidseits der Gewebeschicht (3) an sich gegenüberliegenden Stellen über jeweils eine Materialzuführung (11, 12) unter Druck, insbesondere mittels Extrusion, der Gewebeschicht (3) zugeführt wird.

2. Verfahren nach Anspruch 1, **dadurch gekennzeichnet, dass** das Beschichtungsmaterial auf die Gewebeschicht (3) beidseitig aufgespritzt wird.

3. Verfahren nach einem der vorhergehenden Ansprüche, **dadurch gekennzeichnet, dass** das Beschichtungsmaterial auf beiden Seiten der Gewebeschicht (3) mit unterschiedlichem oder gleichem Druck zugeführt wird.

4. Verfahren nach einem der vorhergehenden Ansprüche, **dadurch gekennzeichnet, dass** die Beschichtung in einem kontinuierlichen Herstellungsvorgang in einer Extrudiervorrichtung (10) erfolgt, wobei die Gewebeschicht (3) durch die Vorrichtung (10) gezogen wird und der Beschichtungsmaterialtransport ausschließlich über die Gewebeschicht (3) erfolgt.

5. Verfahren nach einem der vorhergehenden Ansprüche, **dadurch gekennzeichnet, dass** die Gewebeschicht (3) vor dem Aufbringen des Beschichtungsmaterials insbesondere mechanisch in eine vorgegebene Form gebracht wird und nach der Herstellung ausschließlich durch das Beschichtungsmaterial in der vorgegebenen Form gehalten wird.

6. Verfahren nach einem der vorhergehenden Ansprüche, **dadurch gekennzeichnet, dass** das Beschichtungsmaterial entsprechend der vorgesehenen Funktion des Produkts eine Formgestaltung erhält.

7. Verfahren nach Anspruch 6, **dadurch gekennzeichnet, dass** aus dem Beschichtungsmaterial ein Profil (2) geformt wird, das in einem Endbereich mit einem Steg, einer Abzugskante (6), einer Tropfkante (7) oder dergleichen ausgebildet wird.

8. Verfahren nach einem der Ansprüche 6 oder 7, **dadurch gekennzeichnet, dass** das Profil (2) nachbearbeitet wird.

9. Verfahren nach einem der vorhergehenden Ansprüche, **dadurch gekennzeichnet, dass** dem Gewebestreifen auf der einen Seite ein erstes und auf der gegenüberliegenden Seite ein zweites, vom ersten Beschichtungsmaterial verschiedenes Beschichtungsmaterial, insbesondere unterschiedliche Kunststoffmischungen zugeführt werden.

10. Gewebeschicht, die zumindest abschnittsweise in ein Beschichtungsmaterial eingebettet ist, **dadurch gekennzeichnet, dass** das Beschichtungsmaterial an sich gegenüber liegenden Stellen der Gewebeschicht (3) unter Druck durch jeweils eine Materialzuführung (11, 12) in plastizifiertem Zustand aufgebracht, insbesondere aufextrudiert ist.

11. Gewebeschicht nach Anspruch 10, **dadurch gekennzeichnet, dass** das Beschichtungsmaterial die Gewebeschicht (3) in einer vordefinierten Form hält.

12. Gewebeschicht, nach einem der vorhergehenden Ansprüche 10 oder 11, **dadurch gekennzeichnet, dass** das Beschichtungsmaterial als Profil (2), insbesondere als Eckleiste eines Einputzwinkels (1), ausgebildet ist.

13. Gewebeschicht nach einem der vorhergehenden Ansprüche 10 bis 12, **dadurch gekennzeichnet, dass** an dem Beschichtungsmaterial ein Steg, eine Kante, insbesondere eine Abzugskante (6) oder Tropfkante (7), oder dergleichen ausgebildet ist.

14. Gewebeschicht nach einem der vorhergehenden Ansprüche 10 bis 13, **dadurch gekennzeichnet, dass** das Beschichtungsmaterial Kunststoff ist.

15. Gewebeschicht nach einem der vorhergehenden Ansprüche 10 bis 14, **dadurch gekennzeichnet, dass** das Beschichtungsmaterial PVC ist.

16. Gewebeschicht nach einem der vorhergehenden Ansprüche 10 bis 15, **dadurch gekennzeichnet, dass** die Gewebeschicht (3) aus Glasfasern (4) hergestellt ist.

17. Gewebeschicht nach einem der vorhergehenden Ansprüche 10 bis 16, **dadurch gekennzeichnet, dass** die Gewebeschicht (3) aus Metall hergestellt ist.

18. Gewebeschicht nach einem der vorhergehenden Ansprüche 10 bis 17, **dadurch gekennzeichnet, dass** die Gewebeschicht (3) eine Leinenschicht ist.

19. Gewebeschicht nach einem der vorhergehenden Ansprüche 10 bis 18, **dadurch gekennzeichnet, dass** das Beschichtungsmaterial auf der einen Seite der Gewebeschicht als erste Kunststoffmischung und auf der anderen Seite als zweite, unterschiedliche Kunststoffmischung ausgebildet ist.

20. Extrudiervorrichtung mit einer ersten Materialzuführung (11), **dadurch gekennzeichnet, dass** eine zweite Materialzuführung (12) vorgesehen ist, die der ersten Materialzuführung (11) im Wesentlichen gegenüberliegend angeordnet ist, wobei zwischen den Materialzuführungen ein Zwischenraum (13) für eine Gewebeschicht (3) ausgebildet ist.

21. Extrudiervorrichtung nach Anspruch 19, **dadurch gekennzeichnet, dass** eine Transporteinrichtung zum Transport der Gewebeschicht (3) durch die Extrudiervorrichtung (10) vorgesehen ist.

22. Extrudiervorrichtung nach einem der Ansprüche 20 oder 21, **dadurch gekennzeichnet, dass** ein Formwerkzeug (14) zur Formgebung des durch die Materialzuführungen (11, 12) zugeführten Materials vorgesehen ist.

23. Extrudiervorrichtung nach einem der Ansprüche 20 bis 22, **dadurch gekennzeichnet, dass** eine Vorformeinrichtung in Bearbeitungsrichtung vor den Materialzuführungen (11, 12) angeordnet ist, die der Gewebeschicht (3) eine vorgebbare Form gibt.
